# EUROPEAN PATENT SPECIFICATION

(11) **EP 3 477 465 B1**
(45) Date of publication and mention of the grant of the patent: **07.04.2021**
(21) Application number: 18200920.9
(22) Date of filing: 17.10.2018
(51) Int. Cl.: G06F 3/12

(54) **METHOD FOR MODIFYING A PRINT JOB TO BE PRINTED ONTO A PLURALITY OF SHEETS, SOFTWARE MEDIUM AND PRINTING SYSTEM**
VERFAHREN ZUR MODIFIZIERUNG EINES DRUCKAUFTRAGS AUF EINE VIELZAHL VON BLÄTTERN, SOFTWAREMEDIUM UND DRUCKSYSTEM
PROCÉDÉ DE MODIFICATION D'UNE TÂCHE D'IMPRESSION DEVANT ÊTRE IMPRIMÉE SUR UNE PLURALITÉ DE FEUILLES, SUPPORT LOGICIEL ET SYSTÈME D'IMPRESSION

(30) Priority: 26.10.2017 EP 17198602
(43) Date of publication of application: 01.05.2019
(73) Proprietor: Canon Production Printing Holding B.V., 5914 HH Venlo (NL)
(72) Inventor: STEUX, Jean Marc C.A., 5914 CA Venlo (NL)
(74) Representative: Canon Production Printing IP Department

(56) References cited:
- EP-A1- 1 727 350

## Description

### FIELD OF THE INVENTION

The present invention generally pertains to a method for modifying a print job to be printed onto a plurality of sheets of a medium as part of creating a print product, to a software medium comprising executable program code configured to, when executed, perform said method, and to a printing system configured to perform said method.

### BACKGROUND ART

Print jobs comprise information how a recording medium such as paper is to be marked with a marking material such as ink in order to receive a desired end product. In many cases, a plurality of sheets of a recording medium is marked according to the print job to receive an intermediate product in an intermediate state. Then, additional steps may be performed such as cutting steps in which parts of the sheets are cut away, binding steps in which sheets are bound together, and so on, in order to receive the desired print product in its end state, i.e. an end product.

Often, a plurality of sheets of a recording medium printed according to a print job is stacked and then the stack is cut. In many cases, the stack is cut four times such that the stack is trimmed on all four sides of each sheet of the stack. Usually at least one of the sheets is printed with so-called "trim marks" in addition to the actual desired content of the sheet according to the print job. Normally this is the sheet that, during the executing of the print job by a printing system, ends up on top of the stack.

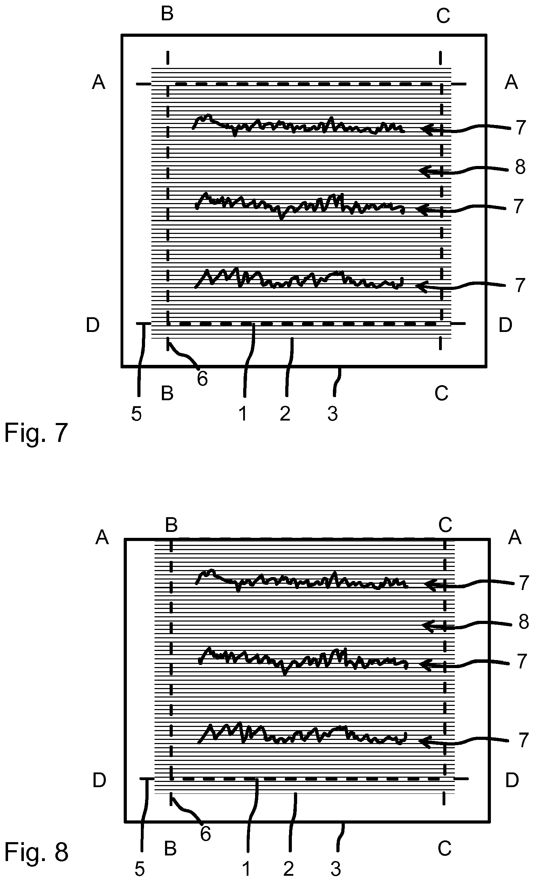

This common practice is illustrated in Fig. 7. Fig. 7 shows a sheet 3 of a recording medium such as paper. It is desired to print onto that sheet 3 an image comprising text 7 (symbolized by three wiggly lines) on a colored background 8 (symbolized by a hashed pattern). The part of the sheet 3 that contains exactly the desired image is called a "trim box" 1 as it is the part to which the end product is ideally trimmed to.

The trim box 1 printed on a part of the sheet 3 has smaller dimensions than the sheet 3 itself so that the trim box 1 must be separated, or individualized, from the rest of the sheet 3 by cutting off excess parts of the sheet 3 that do not belong to the trim box 1. This cutting off of excess parts is called trimming of the image.

If one were to print only exactly the trim box 1, i.e. only exactly the desired image, onto the sheet 3 and then try to cut exactly along the border of the trim box 1, due to unavoidable tolerances and shifts of the sheet 3 and/or the tools used for cutting, there will very likely be portions along the edge of the end product that stem from outside of the trim box 1, that is, which are not colored by the colored background 8 but which instead show the unmarked surface of the sheet 3.

For this reason, the print jobs are usually designed such that the colored background 8 extends further out than just the trim box 1. The extent on the sheet 3 to which the colored background 8 is printed for this reason is called a bleed box 2. The bleed box 2 provides an area of colored background 8 that is not strictly part of the intended image but in which a cutting line for a cutting step during the trimming may be positioned without resulting in an uncolored, or unprinted, portion of the sheet 3 as part of the end product. This additional area is called a trimming buffer.

This means, however, that the edge of the colored background 8 no longer coincides with the desired edge of the desired end product (or, in other words, with the trim box 1). When it comes to trimming the image, however, some indication of where to cut must be present for a user intending to trim the image manually. One option would be to print the boundaries of the trim box 1 itself onto the sheet 3 and to cut along those printed boundaries. However, as there will be tolerances and imperfections in any cutting step, this may result in unwanted remnants of said printed boundaries as part of the end product.

In order to avoid this, one typically prints trim marks 5, 6 onto the sheet. These trim marks 5, 6 usually are formed as short horizontal lines 5 and short vertical lines 6 that are arranged sufficiently far from the trim box 1 for ruling out that remnants of the trim marks are left on the end product. As shown in Fig. 7, usually at each of the four corners of the bleed box one horizontal line 5 and one vertical line 6 are provided, each line 5, 6 being arranged in parallel to two boundary lines of the trim box 1 and as linearly dependent to one of the boundary lines of the trim box.

By virtually connecting each pair of trim marks 5, 6 that are linearly dependent from another and by cutting along the virtual connecting line, which will also comprise one of the (not printed) boundary lines of the trim box 1, the user will cut along that boundary line of the trim box 1. In practice, the user will e.g. arrange a ruler such that the edge of the ruler coincides with a pair of horizontal trim marks 5 or a pair of vertical trim marks 6 at the same time, and then pull a cutting tool along the edge of the ruler, thus cutting the sheet 3.

US 5 631 747 A describes a variation of the solution of adding print marks, printed on the same sheet as the content, outside the bleed box EP 1727350 describes another solution of adding print marks based on number of cutting times.

In principle, it is left to the user, in which order the cuts along the boundary lines of the trim box 1 are performed. However, it will be apparent that once the user has cut along three cut lines, there are no trim marks left to guide the user for the last cut to be performed. Fig. 7 through 10 illustrate this process as they show, one after the other, intermediate states of the intermediate product on its way to becoming the finished print product, wherein in each figure one more cut has been performed than in the foregoing Figure.

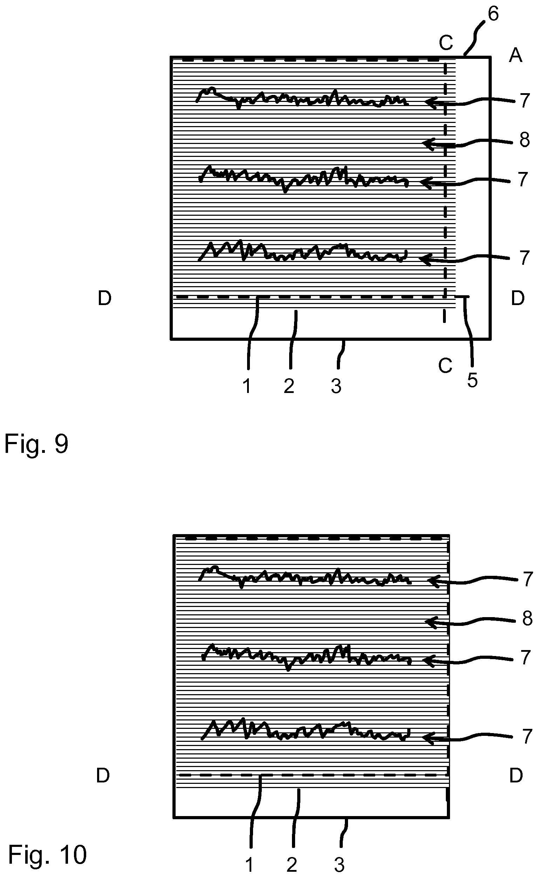

Fig. 7, as has been described in the foregoing, illustrates the starting point after the finishing of the print job. In Fig. 8, the intermediate product in the intermediate state shown in Fig. 7 has been cut by the user along the line A-A shown in Fig. 7. In Fig. 9, the intermediate product in the intermediate state shown in Fig. 8 has been cut by the user along the line B-B shown in Fig. 8. In Fig. 10, the intermediate product in the intermediate state shown in Fig. 9 has been cut by the user along the line C-C shown in Fig. 9. Evidently, the intermediate product in the intermediate state shown in Fig. 10 poses a problem for the user: the lower margin should be cut along the line D-D shown in Fig. 7-9; however, no trim marks are left that indicate to the user where the last manual cut should be performed.

One way to avoid this problem, described e.g. in US 5223939 A, is to use a cutting machine that is able to determine and remember the cutting lines for all cuts to be performed before a single cut is performed and to then perform the cuts one after the other based on the remembered cutting lines, independent from whether they are still visible at the time at which the cut is performed.

However, using a cutting machine is not always a viable option.

Another option is to provide an additional trim banner page, or trim banner sheet, to the print job, which does not contain any actual content of the print job but only trim marks. The trim banner sheet is intended to be used for guidance to the cuts and then to be removed from the intermediate product. Therefore, on the trim banner sheet, the exact trim box may be marked, and followed by a user with a cutting tool.

However, providing a trim banner page or trim banner sheet is only practical when the intermediate product to be cut is unbound. Otherwise, the trim banner page would be bound together with the actual pages of the print job within a bound stack and would not be able to be removed from the bound stack, or not without damage to the print product.

It is desirable to have a method, and a printing system, which avoids the described problem even when all cuts are done manually by a user, and which can also be used when the intermediate product to be cut is a bound stack.

### SUMMARY OF THE INVENTION

One basic idea of the present invention is to modify the print job such that numerical indications are printed in addition, or as an alternative, to the commonly used trim marks, wherein the numerical indications instruct the user how far a cut line for a cut that the user needs to be perform is located from a reference object or a reference geometrical feature of an intermediate product in an intermediate state in which the cut has to be performed.

Accordingly, according to a first aspect of the present invention, a method for modifying a print job to be printed onto a plurality of sheets of a medium as part of creating a print product, is provided, the method comprising the steps of automatically:
a) receiving print project data comprising a print job to be printed onto a plurality of individual sheets of a medium and further comprising process data indicating how the print job is to be processed for creating the print product;
b) determining, based on the print project data, a first intermediate state during the creating of the print product at which an intermediate product is to be cut in a manual cutting step;
c) determining, based on the print project data, a reference object and/or a reference geometrical feature of the intermediate product in the first intermediate state;
d) determining, based on the print project data, a cut line along which the intermediate product in the first intermediate state is to be cut in the manual cutting step;
e) determining, based on the print project data, a distance from the reference object or reference geometrical feature of the intermediate product in the first intermediate state to the determined cut line;
f) determining, based on the print project data, an indicator position comprised by the intermediate product in the first intermediate state but not comprised by the end product;
g) modifying the print job such that a cut distance information item indicating the determined distance numerically is to be printed in the determined indicator position; and
h) executing the modified print job.

The process data may in particular comprise cutting data which indicate where, i.e. along which line or lines, and in which intermediate states of the print product, cutting steps have to be performed. However, cut lines may also be determined automatically without specific cutting data, e.g. by a trimming or cropping algorithm.

As a simple reference geometrical feature, an edge of the intermediate product still present in the intermediate state may be used. A reference object may, for example, be a line printed in parallel to such an edge, wherein the line is printed outside of the trim box in a location that is still part of the intermediate state in which the cut has to be performed but which will not be part of the end product. Otherwise, the reference object would be present in the end product which is undesirable in most circumstances.

The cut distance information item preferably comprises, or consists of, an alphanumerical text such as "3 cm" or the like.

Using the cut distance information item, the user may then simply cut the intermediate product along a cut line separated by the distance indicated by the cut distance information item from the respective reference object, or reference geometrical feature. In case that conventional trim marks are added, the user may use those until the very last cutting step, in which no conventional trim marks will remain. In that situation, the user can then comfortably rely on the cut distance information item.

Preferably, at least one cut distance information item is added such to the print job that the cut distance information item is visible at the outside of the intermediate product in the intermediate state to the user. For example, the cut distance information item may be added to a sheet, or a part of a sheet of paper, that constitutes a front page, or a last page, of the intermediate product in the intermediate state.

The invention further provides, according to a second aspect, a printing system configured to perform the method according to any embodiment of the first aspect. The printing system may, for this purpose, in particular comprise a processor operatively coupled to a non-volatile memory storing software and/or firmware configured to perform, when executed, the method according to any embodiment of the first aspect. The invention also provides, according to a third aspect, a software medium comprising executable code configured to, when executed, perform the method according to any embodiment of the first aspect.

Additional advantages, and the solution of additional problems, will be apparent from the subject-matter of the dependent claims as well as from the description and the drawings.

In some advantages, at least two manual cutting steps are to be performed on the intermediate product in the intermediate state for creating the print product. For example, four manual cutting steps are to be performed, such as trimming al four edges of a rectangular-shaped sheet, or a stack of sheets, of a recording medium such as paper.

In some advantages, the manual cutting step to be applied to the intermediate product in the intermediate state is the last cutting step of the at least two manual cutting steps, for example the last cutting step of four manual cutting steps. It has been described how in that case, especially, the cut distance information items are helpful for the user performing the manual cutting steps.

In some advantages, a preferred order of performing the at least two manual cutting steps is determined based on the print project data. The determining of the preferred order may be based on preset criteria and/or on criteria that the user is able to provide or adapt. For example, the preferred order could be determined based on criteria such as "minimization of waste", "minimization of effort", the desire to receive cut-off strips of recording medium of certain dimensions (e.g. maximum and/or minimum length and/or width) and the like.

Preferably, the steps b)-g) outlined above are performed for each of the at least two manual cutting steps in the determined preferred order of manual cutting steps. In that way, it is ensured that, when the user follows the preferred order, the user always has guidance for the cutting steps provided by the cut distance information items.

In some advantages, in each instance of step g), the print job is further modified such that in the determined indicator position also an order number is printed indicating the number of the corresponding manual cutting step in the determined preferred order of the manual cutting steps. Thus, the user will be reminded, or informed, of the preferred cutting order, based on which the cut distance information items have been provided.

In some advantages, the print job is modified, in each instance of step g), such that each determined indicator position, at the time the respective manual cutting step corresponding to that indicator position is to be performed, is at an outer surface of the intermediate product, e.g. at a front page of the intermediate product. In this way, the cut distance information items will be immediately apparent to the user and not easily overlooked.

In some advantages, it is determined whether a second intermediate state of the intermediate product exists in which at least one cut is to be performed and in which the intermediate product consists of a stack of loose sheets and, if that is the case, the print job is modified such that an additional page with trim marks, i.e. a trim banner page as described above, is added to the print job such that the additional page is arranged, or able to be arranged, as a new front page or a new last page of said stack of loose sheets in said second intermediate state.

In particular, the trim marks of the trim banner page may have the form of the trim box of the stack under the trim banner page itself, drawn in full lines, dashed lines, dotted lines, dash-dotted lines or the like. In that way, the user may cut exactly along the trim box which leads to a very precise and accurate cut.

As the trim banner page is an efficient tool for guiding the manual cutting steps of an unbound stack, where the trim banner page can be removed afterwards, in some preferred embodiments, in step b) only such intermediate steps are determined in which the intermediate product comprises, or consists of, a stack of bound sheets.

The method may be readily combined with other methods known in the art for giving a user guidance for manual cutting steps, such as trim banner pages for such intermediate states that are not bound stacks. For example, the method may be configured to automatically determine, for each intermediate state of an intermediate product on the way to the finished print product in which a cutting step has to be performed, whether said intermediate state is a bound stack, or an unbound stack. The method may then automatically modify the print job to provide trim banner pages or trim banner sheets for the intermediate states that are unbound, and to provide the above-described steps b)-g) for the intermediate states that are bound stacks.

A bound stack is herein to be understood as any stack of sheets that are bound together, specifically a stack of sheets that will continue to stay bound in that way even in the finished print product. The sheets may be bound together by any method known in the art, for example by gluing, stapling and the like.

Of course, additional conventional trim marks may also be provided automatically. In other words, the method may comprise a step of determining trim marks for at least one sheet, or page, of the print job, and to modify the print job such that these trim marks are printed. For example, conventional trim marks may be used on pages that comprise two or more images that have to be separated from each other.

In some advantages, wherein the reference geometrical feature is an edge of at least one page, or an edge of a stack of pages, of the intermediate product. In case that multiple cutting steps are to be performed, the reference geometrical feature for all of the cutting steps may be chosen each of the same quality, i.e. the reference geometrical features may all be chosen to be edges of the intermediate product.

In some advantages, the print job is modified such that the reference object is printed onto at least one sheet of the intermediate product. This may be useful when a suitable reference geometrical feature, such as an edge, is further away than a predetermined distance threshold such that it may become difficult for the user to accurately cut in the indicated distance from that reference geometrical feature. The printed reference object preferably comprises at least one line, or a box.

It may however be possible to use other reference objects that are not printed. For example, according to the print project data, the sheets of the recording medium to be marked may have certain characteristics that may serve as suitable reference objects, such as indicated lines or the like.

As another possibility, the reference geometrical object may be added in addition, as a matter of intended redundancy. In that case, a cut distance information item for both the reference geometrical feature and for the reference object may be added by modifying the print job accordingly.

### BRIEF DESCRIPTION OF THE DRAWINGS

The present invention will become more fully understood from the detailed description given herein-below and the accompanying schematic drawings which are given by way of illustration only, and thus are not limitative of the present invention, and wherein:
- Fig. 1: shows a schematic flow diagram illustrating a method according to an embodiment of the first aspect;
- Fig. 2: shows a schematic block diagram illustrating a printing system according to an embodiment of the second aspect;
- Fig. 3: shows schematically a page of a print job modified according to the method of Fig. 1;
- Fig. 4: shows schematically a trim banner page that may be used in embodiments of the method according to the first aspect;
- Fig. 5: schematically shows a software medium according to an embodiment of the third aspect;
- Fig. 6: shows a schematic flow diagram illustrating a method according to another example of the first aspect;
- Fig. 7-10: show schematically intermediate states of a print product on which several cutting steps are performed.

### DETAILED DESCRIPTION OF THE DRAWINGS

The present invention will now be described with reference to the accompanying drawings, wherein the same reference numerals have been used to identify the same or similar elements throughout the several views, and in some instances throughout the several embodiments.

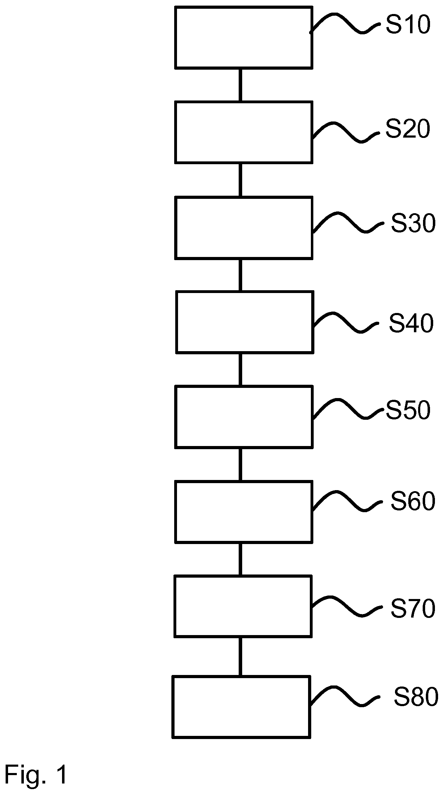

Fig. 1 shows a schematic flow diagram illustrating a method for modifying a print job to be printed onto a plurality of sheets of a medium as part of creating a print product according to an embodiment of the first aspect.

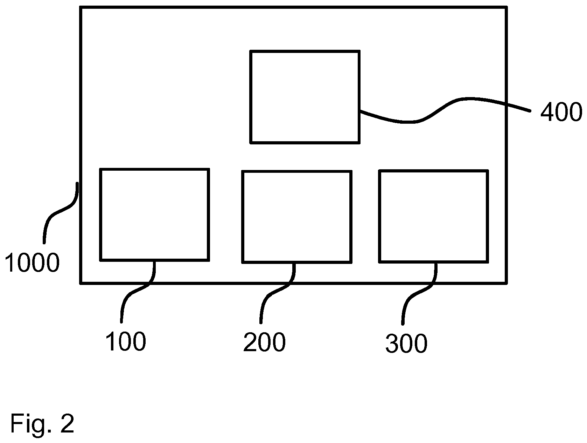

The method of Fig. 1 will be explained also with reference to the Figures 2 to 4 and 7 to 10 and the reference signs shown therein.

Fig. 2 shows a schematic block diagram of a printing system 1000 according to an embodiment of the second aspect. The printing system 1000 is configured to perform the method of Fig. 1. In the following, during the discussion of the method, reference will also be made to elements of the printing system 1000. It should be understood that these references are only given by way of further examples and are not intended to limit the method to being specifically performed by said elements.

For example, the method may be performed by a software application that prepares a document, or a print job, for printing and finishing, including the addition of print marks and trim banner pages. The method may also be performed by an algorithm running in a printer controller preparing a document, or a print job, for printing and finishing, including ripping.

In a step S10, print project data are received, e.g. by a data interface 100 of the printing system.

The print project data comprise a print job to be printed onto a plurality of individual sheets of a medium, for example data for printing the pages of a book onto individual sheets of paper, wherein most sheets are printed with four or more pages of the book. The print project data further comprise process data indicating how the print job is to be processed for creating the print product, i.e. the finished book. For example, the printed sheets of paper have to be cut and bound.

In a step S20, based on the print project data, a first intermediate state during the creating of the print product is determined at which an intermediate product is to be cut in a manual cutting step. The intermediate product could, for example, be a stack of printed sheets of paper that now have to be trimmed all by the same amount.

The print project data may comprise a full set of instructions for every step from the printing of the sheets to the finished print product. Alternatively, an algorithm may create a simulation of the creating process from the received print project data.

In a step S30, based on the print project data, a reference object or reference geometrical feature of the intermediate product in the first intermediate state is determined. For example, the reference geometrical feature may be an edge of the intermediate product, preferably an edge that will be cut away in the manual cutting step to follow. The edge is a suitable reference geometrical feature that is clearly recognizable to the user of the method or the printing system 1000.

Instead of a reference geometrical feature, a reference object may be determined in the step S30, for example a reference line, a reference box or the like, in particular a reference object that has been added to the print job specifically to act as reference object. In that case, the method may comprise a step of modifying the print job to add at least one reference object to at least one image to be printed according to the print job.

In a step S40, based on the print project data, a cut line is determined along which the intermediate product in the first intermediate state is to be cut in the manual cutting step. The print project data may comprise detailed cutting data so that the cut line may be read out from said cutting data.

In a step S50, based on the print project data, a distance from the reference object or reference geometrical feature of the intermediate product in the first intermediate state to the cut line determined in step S40 is determined, in particular calculated. In the event that the reference geometrical feature is an edge of the intermediate product, the determined difference may be equivalent to a distance by which the intended cut line is shifted in parallel with respect to the edge. The same applies when a reference object such as, preferably, a reference line is used.

In a step S60, based on the print project data, an indicator position comprised by the intermediate product in the first intermediate state but not comprised by the end product is determined. For example, the indicator position may be part of a section of the medium that is to be cut away by cutting along the cut line determined in step S40. The indicator position may also be part of another section of the medium that is to be cut away in another cutting step following the cutting step along the cut line determined in step S40.

In a step S70, the print job is modified such that a cut distance information item indicating the determined distance alphanumerically is to be printed in the determined indicator position. In particular, the cut distance information item may comprise a unit of distance such as "cm" or "mm" and a number such as "3". The cut distance information item may also be called a distance information and may comprise a symbolic indication of the respective reference geometrical feature (such as an arrow pointing to a specific edge) and/or to a reference object (such as a copy, or smaller replica, of the actual reference object).

The steps S20 through S60 may all be performed, for example, by the processor 200 of the printing system 1000 running a software and/or firmware stored in the memory 300.

The processor 200 may be part of a printer controller, or may also execute functions that are associated with printer controllers.

In a step S80, the modified print job is then printed, e.g. using a printer 400 of the printing system 1000. Thereafter, the user may perform the at least one manual cutting steps as indicated by the cut distance information item in combination with the respective reference object or reference geometrical feature.

It will be understood that the step S20-S60 may be performed multiple times, for example once for each manual cutting step that is to be performed on the print job for creating the print product.

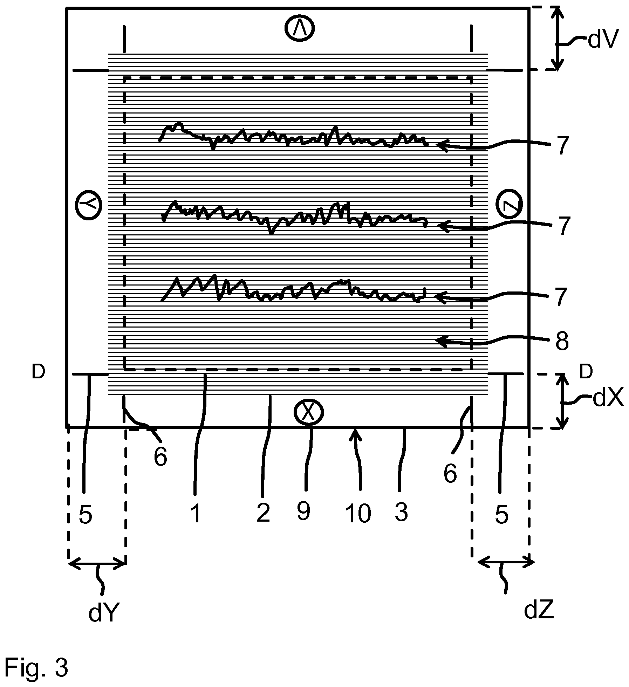

Fig. 3 shows a schematic depiction of a sheet of paper 3 with a trim box 1 and content 7, 8 as has been previously described with respect to Fig. 7-10. In addition, in Fig. 3 the printed cut distance information items 9 are visible which have been designated as V, X, Y, and Z to illustrate that the cut distance information items 9 may all show different numerical values. In the example shown in Fig. 3, all of the four cut distance information items 9 indicate to a user, how far away from the respective edge, close to which the respective cut distance information item 9 has been printed, the user is to cut in parallel to the respective edge. Thus, each of the cut distance information items 9 will indicate a respective one of the distances dV, dX, dY, dZ as marked in Fig. 3 to the user.

For example, the cut distance information item 9 marked "X" may recite "3cm", indicating that the user should cut the (invisible) line D-D at 3 centimeters removed from the edge 10. From Fig. 3 it is apparent that each of the cut distance information items 9 will always be present, together with its respective reference geometrical feature (e.g. edge), regardless of how, and in which order, the user performs the cuts along the (invisible) trim box1.

Moreover, each cut distance information item 9 will be removed from the intermediate state of the print product by the same cutting step for which it gave the user guidance. Accordingly, each cut distance information item 9 will be present in the intermediate product only as long, and exactly as long, it is needed so that no superfluous information is present in the intermediate product at any time.

As an alternative to proceeding as shown in Fig. 3, the method may also be configured such that only one cut distance information item 9 is added to the print job. As has been discussed with respect to Fig. 7-10, when conventional trim marks 5, 6 are used, only left without guidance for the very last cutting step. Accordingly, the method may be configured to perform the steps S20-S60 only for the very last cutting step of a series of cutting steps. The user will in that case simply have to take care to cut along the cutting line with the cut distance information item 9 as the very last cut.

Further alternatively, the method may be configured to print, next to each cut distance information item 9, or to some cut distance information items 9, or as part of each cut distance information item 9, or as part of some cut distance information items 9, an order number. The order numbers indicate to the user which cutting steps he has to perform in which order to make sure that the user always has guidance on where to cut.

It has also been discussed that so-called trim banner sheets, or trim banner pages, can be used to give a user guidance on where to cut a stack of paper. Accordingly, the method may comprise a step of modifying the print job to include a banner page having trim marks such as short vertical and horizontal lines or even a completely marked trim box.

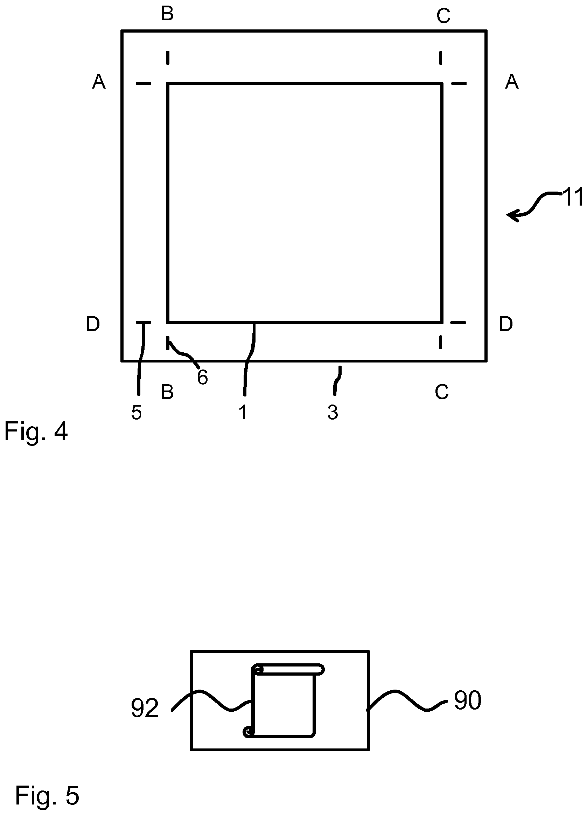

In Fig. 4, such a trim banner page 11 is schematically shown. The trim box 1 is shown with an unbroken line indicating that it is actually printed onto the sheet 3. However, the printing itself may be done with unbroken lines or broken lines such as dotted, dashed, dash-dotted lines and so on.

Such trim banner pages 11 are removed from the stack of sheets after cutting of the stack and therefore can only be used when the stack is not, according to the process data, bound before the cutting. However, for creating a specific print product, it may be necessary that an unbound stack, as an intermediate product in a first intermediate state, is cut (thus forming a second intermediate state), then bound (forming a third intermediate state), and then has to be cut again.

Accordingly, the method may in this case comprise modifying the print job to first provide a trim banner page 11 for the intermediate product in the first intermediate state, and that then, starting from the third intermediate state, the steps S20-S70 are performed one or more times.

In other words, the method may generally modify the print job to:
- provide a trim banner sheet, or trim banner page 11, for intermediate states comprising only loose sheets on which cutting steps have to be performed; and
- provide the cut distance information items 9, or "distance information", for intermediate states that consist of a bound stack.

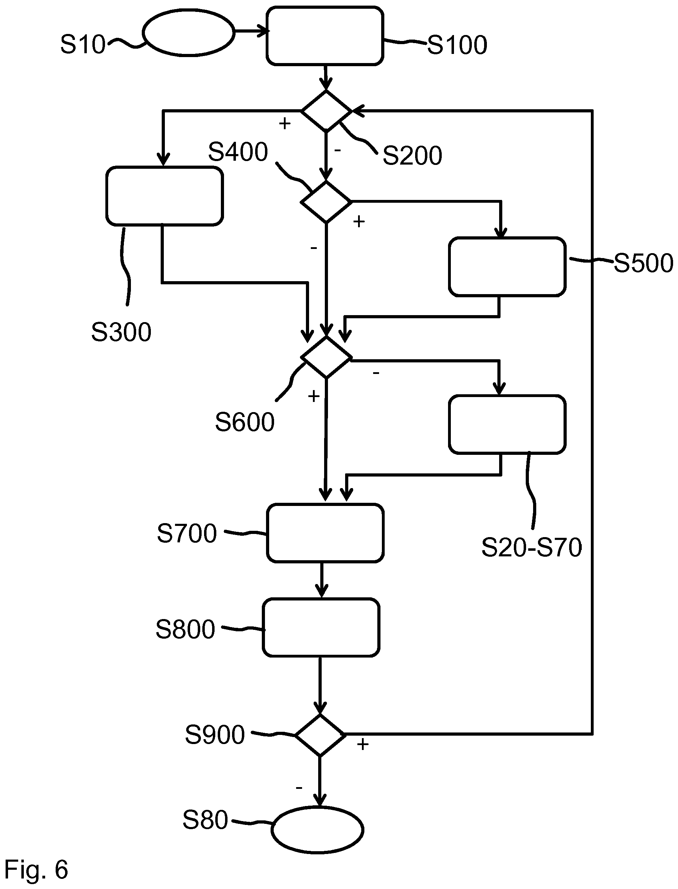

These possible features will be further explained with respect to Fig. 6 in the following.

Optionally, in any of the two, or in both, of these cases conventional trim marks may be added for redundancy.

Fig. 5 schematically shows a software medium 90 according to an embodiment of the third aspect. The software medium 90 comprises executable code 92 configured to, when executed, perform the method of the first aspect according to any embodiment including any variations or modifications described thereof.

The software medium 90 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

Fig. 6 shows a schematic flow diagram illustrating a method according to another example of the first aspect. Also, the method of Fig. 6 may be performed e.g. by the printing system 1000 and/or when the executable code 92 of the software medium 90 is executed.

According to the method of Fig. 6, gain, in a step S10, print project data are received, e.g. as has been described in detail in the foregoing. From the print project data received, in a step S100, a starting state of the intermediate product is determined, in which at least one cut is still to be performed, if not necessarily immediately.

In a step S200, it is then determined whether, in that state of the intermediate product, a binding step is to be performed. If that is the case (indicated by a "+" sign), it is simulated, in a step S300, that said binding is performed. After that simulating S300, the method will be continued in a step S600 that will be explained further below.

If in step S200 it is determined that no binding is to be performed at that stage (indicated by a "-" sign), then, in a step S400, it is determined whether the current intermediate state is made of (i.e. consist of) loose sheets, or loose leaves. If that is the case (indicated by a "+" sign), in a step S500 a trim banner page, such as the trim banner page 11 shown schematically in Fig. 6, is designed and the print job is modified to include that trim banner page. If that is not the case (indicated by a "-" sign), as well as when step S500 has been performed, the method continues with the step S600.

In the step S600, it is determined whether there are multiple images per sheet present in the current intermediate state. If that is the case (indicated by a "+" sign), then the method continues with an optional step S700 that will be explained further below. If that is not the case (indicated by a "-" sign), then the steps S20-S70 of Fig. 1 will be performed, i.e. the print job will be modified to include the cut distance information items 9, e.g. as illustrated in Fig. 3. It should be understood that, as has been described in the foregoing, the steps S20-S70 may be performed repeatedly. After that, the method continues with the optional step S700.

In the optional step S700, the print job is modified to add conventional print marks. Whether or not the optional step S700 is performed, the method continues then with a step S800, in which cutting (or trimming) steps are simulated. Optionally, it may also be simulated that stacks are merged into a single stack. For example, previously two images per sheet may have been present, which are then simulated to be trimmed, and the trimmed images may then form a new, single stack.

In a following step S900, it is then determined whether additional cutting steps are to be performed. If that is the case (indicated by a "+" sign), then the method continues with step S200. If that is not the case (indicated by a "-" sign), the method continues with step S80, in which the modified print job is then printed (and, subsequently, manually cut).

While detailed embodiments of the present invention are disclosed herein, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims are herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language).

It will be evident that the described embodiments may be varied in many ways.

One basic idea of the invention may be summarized as follows: in addition, or as an alternative, to conventional trim marks, cut distance information items are printed onto a sheet of paper that is to be cut manually, wherein the cut distance information items tell the user how far from a specific reference geometrical feature, or reference object, the user is to perform the cut. The cut distance information items are positioned such that the user will perceive them when the respective cutting step is to be performed.

## Claims

1. A method for modifying a print job to be printed onto a plurality of sheets (3) of a medium as part of creating a print product, comprising the steps of automatically:
a) receiving (S10) print project data comprising a print job to be printed onto a plurality of individual sheets (3) of a medium and further comprising process data indicating how the print job is to be processed for creating the print product;
b) determining (S20), based on the print project data, a first intermediate state during the creating of the print product at which an intermediate product is to be cut in a manual cutting step;
c) determining (S30), based on the print project data, a reference object and/or reference geometrical feature (10) of the intermediate product in the first intermediate state;
d) determining (S40), based on the print project data, a cut line (A-A, B-B, C-C, D-D) along which the intermediate product in the first intermediate state is to be cut in the manual cutting step;
e) determining (S50), based on the print project data, a distance (dV, dX, dY, dZ) from the reference object or reference geometrical feature (10) of the intermediate product in the first intermediate state to the determined cut line (A-A, B-B, C-C, D-D);
f) determining (S60), based on the print project data, an indicator position comprised by the intermediate product in the first intermediate state but not comprised by the end product;
g) modifying (S70) the print job such that a cut distance information item (9) indicating the determined distance numerically is to be printed in the determined indicator position; and
h) executing (S80) the modified print job.

2. The method of claim 1,
wherein at least two manual cutting steps are to be performed for creating the print product.

3. The method of claim 2,
wherein the manual cutting step to be applied to the intermediate product in the intermediate state is the last cutting step of the at least two manual cutting steps.

4. The method of claim 2,
wherein a preferred order of performing the at least two manual cutting steps is determined based on the print project data; and
wherein the steps b)-g) are performed for each of the at least two manual cutting steps in the determined preferred order of manual cutting steps.

5. The method of claim 4,
wherein, in each instance of step g), the print job is further modified such that in the determined indicator position also an order number is printed indicating the number of the corresponding manual cutting step in the determined preferred order of the manual cutting steps.

6. The method of any of claims 1 to 5,
wherein the print job is modified, in each instance of step g), such that each determined indicator position, at the time the respective manual cutting step corresponding to that indicator position is to be performed, is at an outer surface of the intermediate product.

7. The method of any one of claims 1 to 6,
wherein it is determined whether a second intermediate state of the intermediate product exists in which at least one cut is to be performed and in which the intermediate product consists of a stack of loose sheets and, if that is the case, wherein the print job is modified such that an additional trim banner page (11) with trim marks (1) is added to the print job such that the trim banner page (11) is arranged, or able to be arranged, as a new front page or a new last page of said stack of loose sheets in said second intermediate state.

8. The method of any one of claims 1 to 7,
wherein the reference geometrical feature is an edge (10) of at least one page of the intermediate product.

9. The method of any one of claims 1 to 8,
wherein the print job is modified such that the reference object is printed onto at least one sheet of the intermediate product.

10. The method of claim 9,
wherein the reference object comprises at least one line.

11. The method of claim 10,
wherein the reference object is a box.

12. A software medium (90) comprising executable program code (92) configured to, when executed, by a computer, cause the computer to perform the method according to any one of claims 1 to 11.

13. A printing system (1000) configured to perform the method according to any one of claims 1 to 11.

## Patentansprüche

1. Verfahren zum Modifizieren eines Druckauftrages, der als Teil der Erzeugung eines Druckerzeugnisses auf eine Vielzahl von Bögen (3) eines Mediums zu drucken ist, mit den folgenden automatisch ausgeführten Schritten:
a) empfangen (S10) von Druckprojektdaten, die einen auf eine Vielzahl von einzelnen Bögen (3) eines Mediums zu druckenden Druckauftrag enthalten und die weiterhin Prozessdaten enthalten, die angeben, wie der Druckauftrag zu bearbeiten ist, um das Druckerzeugnis herzustellen;
b) bestimmen (S20), auf der Grundlage der Druckprojektdaten, eines ersten Zwischenzustands während der Herstellung des Druckerzeugnisses, in welchem ein Zwischenprodukt in einem manuellen Schneidschritt zu schneiden ist:
c) bestimmen (S30), auf der Basis der Druckprojektdaten, eines Referenzobjekts und/oder eines geometrischen Referenzmerkmals (10) des Zwischenproduktes in dem ersten Zwischenzustand;
d) bestimmen (S40), auf der Grundlage der Druckprojektdaten, einer Schneidlinie (A-A, B-B. C-C, D-D), entlang welcher das Zwischenprodukt in dem ersten Zwischenzustand in dem manuellen Schneidschritt zu schneiden ist;
e) bestimmen (S50), auf der Grundlage der Druckprojektdaten, einer Distanz (dV, dX, dY, dZ) von dem Referenzobjekt oder dem geometrischen Referenzmerkmal (10) des Zwischenprodukts in dem ersten Zwischenzustand zu der bestimmten Schneidlinie (A-A, B-B. C-C, D-D);
f) bestimmen (S60), auf der Grundlage der Druckprojektdaten, einer Indikatorposition, die das Zwischenprodukt in dem ersten Zwischenzustand einnimmt, die jedoch das Endprodukt nicht einnimmt;
g) modifizieren (S70) des Druckauftrags derart, dass ein Informationsmerkmal (9) bezüglich der Schneiddistanz, das die bestimme Distanz numerisch angibt, in der bestimmten Indikatorposition zu drucken ist; und
h) ausführen (S80) des modifizierten Druckauftrags.

2. Verfahren nach Anspruch 1,
bei dem wenigstens zwei manuelle Schneidschritte auszuführen sind, um das Druckerzeugnis herzustellen.

3. Verfahren nach Anspruch 2,
bei dem der manuelle Schneidschritt, der auf das Zwischenprodukt in dem Zwischenzustand anzuwenden ist, der letzte Schneidschritt unter den wenigstens zwei manuellen Schneidschritten ist.

4. Verfahren nach Anspruch 2,
bei dem eine bevorzugte Reihenfolge der Ausführung der wenigstens zwei manuellen Schneidschritte auf der Basis der Druckprojektdaten bestimmt wird; und
bei dem die Schritte b) - g) für jeden der wenigstens zwei manuellen Schneidschritte in der bestimmten bevorzugten Reihenfolge der manuellen Schneidschritte ausgeführt werden.

5. Verfahren nach Anspruch 4,
bei dem bei jeder Ausführung des Schrittes g) der Druckauftrag derart weiter modifiziert wird, dass in der bestimmten Indikatorposition auch eine Ordnungsnummer gedruckt wird, die die Stelle des entsprechenden manuellen Schneidschrittes in der bestimmten bevorzugten Reihenfolge der manuellen Schneidschritte angibt.

6. Verfahren nach einem der Ansprüche 1 bis 5,
bei dem der Druckauftrag bei jeder Ausführung des Schrittes g) so modifiziert wird, dass jede bestimmte Indikatorposition zu der Zeit, zu welcher der jeweils dieser Indikatorposition entsprechende manuelle Schneidschritt auszuführen ist, sich an einer äußeren Oberfläche des Zwischenprodukts befindet.

7. Verfahren nach einem der Ansprüche 1 bis 6,
bei dem entschieden wird, ob ein zweiter Zwischenzustand des Zwischenprodukts existiert, in dem wenigstens ein Schnitt auszuführen ist und in dem das Zwischenprodukt aus einem Stapel loser Blätter besteht, und, wenn dies der Fall ist, der Druckauftrag so modifiziert wird, dass zu dem Druckauftrag eine zusätzliche Zuschnitt-Bannerseite (11) mit Zuschnittmarken (1) zugefügt wird, so dass die Zuschnitt-Bannerseite (11) als ein neues Deckblatt oder als ein letztes Blatt des Stapels der losen Blätter in diesem zweiten Zwischenzustand angeordnet ist oder angeordnet werden kann.

8. Verfahren nach einem der Ansprüche 1 bis 7,
bei dem das geometrische Referenzmerkmal eine Kante (10) wenigstens einer Seite des Zwischenprodukts ist.

9. Verfahren nach einem der Ansprüche 1 bis 8,
bei dem der Druckauftrag so modifiziert wird, dass das Referenzobjekt auf wenigstens ein Blatt des Zwischenprodukts gedruckt wird.

10. Verfahren nach Anspruch 9,
bei dem das Referenzobjekt wenigstens eine Zeile aufweist.

11. Verfahren nach Anspruch 10,
bei dem das Referenzobjekt ein Kasten ist.

12. Softwaremedium (19) mit ausführbarem Programmcode (92), der dazu konfiguriert ist, wenn er von einem Computer ausgeführt wird, den Computer zu veranlassen, das Verfahren nach einem der Ansprüche 1 bis 11 auszuführen.

13. Drucksystem (1000), das dazu konfiguriert ist, das Verfahren nach einem der Ansprüche 1 bis 11 auszuführen.

## Revendications

1. Procédé de modification d'une tâche d'impression devant être imprimée sur une pluralité de feuilles (3) d'un support dans le cadre d'une création d'un produit d'impression, comprenant les étapes automatiques consistant à :
a) recevoir (S10) des données de projet d'impression comprenant une tâche d'impression devant être imprimée sur une pluralité de feuilles individuelles (3) d'un support et comprenant en outre des données de processus indiquant comment la tâche d'impression doit être traitée pour créer le produit d'impression ;
b) déterminer (S20), sur la base des données de projet d'impression, un premier état intermédiaire pendant la création du produit d'impression au niveau de laquelle un produit intermédiaire doit être découpé dans une étape de découpe manuelle ;
c) déterminer (S30), sur la base des données de projet d'impression, un objet de référence et/ou une caractéristique géométrique de référence (10) du produit intermédiaire dans le premier état intermédiaire ;
d) déterminer (S40), sur la base des données de projet d'impression, une ligne de découpe (A-A, B-B, C-C, D-D) le long de laquelle le produit intermédiaire dans le premier état intermédiaire doit être découpé lors de l'étape de découpe manuelle ;
e) déterminer (S50), sur la base des données de projet d'impression, une distance (dV, dX, dY, dZ) de l'objet de référence ou de la caractéristique géométrique de référence (10) du produit intermédiaire dans le premier état intermédiaire jusqu'à la ligne de découpe déterminée (A-A, B-B, C-C, D-D);
f) déterminer (S60), sur la base des données de projet d'impression, une position d'indicateur comprise par le produit intermédiaire dans le premier état intermédiaire mais non comprise par le produit final ;
g) modifier (S70) la tâche d'impression de telle sorte qu'une information de distance de découpe (9) indiquant numériquement la distance déterminée doit être imprimée dans la position d'indicateur déterminée ; et
h) exécuter (S80) la tâche d'impression modifiée.

2. Procédé selon la revendication 1,
dans lequel au moins deux étapes de découpe manuelle doivent être effectuées pour créer le produit d'impression.

3. Procédé selon la revendication 2,
dans lequel l'étape de découpe manuelle à appliquer au produit intermédiaire dans l'état intermédiaire est la dernière étape de découpe des au moins deux étapes de découpe manuelle.

4. Procédé selon la revendication 2,
dans lequel un ordre préféré d'exécution des au moins deux étapes de découpe manuelle est déterminé sur la base des données de projet d'impression ; et
dans lequel les étapes b)-g) sont exécutées pour chacune des au moins deux étapes de découpe manuelle dans l'ordre préféré déterminé d'étapes de découpe manuelle.

5. Procédé selon la revendication 4,
dans lequel, à chaque instance de l'étape g), la tâche d'impression est en outre modifiée de telle sorte que dans la position d'indicateur déterminée un numéro d'ordre est également imprimé, indiquant le numéro de l'étape de découpe manuelle correspondante dans l'ordre préféré déterminé des étapes de découpe manuelle.

6. Procédé selon l'une quelconque des revendications 1 à 5,
dans lequel la tâche d'impression est modifiée, à chaque instance de l'étape g), de telle sorte que chaque position d'indicateur déterminée, au moment où l'étape de découpe manuelle respective correspondant à cette position d'indicateur doit être exécutée, se trouve au niveau d'une surface extérieure du produit intermédiaire.

7. Procédé selon l'une quelconque des revendications 1 à 6,
dans lequel il est déterminé s'il existe un second état intermédiaire du produit intermédiaire dans lequel au moins une découpe doit être effectuée et dans lequel le produit intermédiaire consiste en une pile de feuilles volantes et, si tel est le cas, dans lequel la tâche d'impression est modifiée de telle sorte qu'une page de garde de rognage supplémentaire (11) avec des marques de rognage (1) est ajoutée à la tâche d'impression de telle sorte que la page de garde de rognage (11) soit agencée, ou puisse être agencée, comme une nouvelle page avant ou une nouvelle page arrière de ladite pile de feuilles volantes dans ledit second état intermédiaire.

8. Procédé selon l'une quelconque des revendications 1 à 7,
dans lequel la caractéristique géométrique de référence est un bord (10) d'au moins une page du produit intermédiaire.

9. Procédé selon l'une quelconque des revendications 1 à 8,
dans lequel la tâche d'impression est modifiée de telle sorte que l'objet de référence soit imprimé sur au moins une feuille du produit intermédiaire.

10. Procédé selon la revendication 9,
dans lequel l'objet de référence comprend au moins une ligne.

11. Procédé selon la revendication 10,
dans lequel l'objet de référence est une boîte.

12. Support de logiciel (90) comprenant un code de programme exécutable (92) configuré pour, lorsqu'il est exécuté par un ordinateur, amener l'ordinateur à exécuter le procédé selon l'une quelconque des revendications 1 à 11.

13. Système d'impression (1000) configuré pour mettre en œuvre le procédé selon l'une quelconque des revendications 1 à 11.
